**Europäisches Patentamt**

**European Patent Office**

**Office européen des brevets**

(19)

(11) Veröffentlichungsnummer: **0 023 997**
**B1**

(12) # EUROPÄISCHE PATENTSCHRIFT

(45) Veröffentlichungstag der Patentschrift:
**23.06.82**

(51) Int. Cl.³: **F 16 L 25/02** // F16K5/06

(21) Anmeldenummer: **80104415.7**

(22) Anmeldetag: **26.07.80**

(54) Elektrisch isolierende Verbindung zur Kupplung rohrförmiger Endteile.

(30) Priorität: **08.08.79 DE 2932107**

(43) Veröffentlichungstag der Anmeldung:
**18.02.81 Patentblatt 81/7**

(45) Bekanntmachung des Hinweises auf die Patenterteilung:
**23.06.82 Patentblatt 82/25**

(84) Benannte Vertragsstaaten:
**AT FR GB**

(56) Entgegenhaltungen:
**DE-A-1 954 926**
**FR-A-2 026 806**
**FR-A-2 186 318**

(73) Patentinhaber: **Walz, Georg, Nibelungenstrasse 16,
D-7920 Heidenheim/Brenz (DE)**

(72) Erfinder: **Walz, Georg, Nibelungenstrasse 16,
D-7920 Heidenheim/Brenz (DE)**

(74) Vertreter: **Holzer, Rupprecht, Dipl.-Ing.,
Philippine-Welser-Strasse 14, D-8900 Augsburg (DE)**

BUNDESDRUCKEREI BERLIN

Elektrisch isolierende Verbindung zur Kupplung rohrförmiger Endteile

Die Erfindung betrifft eine elektrisch isolierende Verbindung zur Kupplung rohrförmiger Endteile, die ein entgegen einer elastischen Axial-Gegenkraft in das eine Endteil abdichtend eingeschobenes, das andere Endteil haltendes und mit dem einen Endteil unter Aufrechterhaltung der Axialspannung verschweißtes Rohreinsatzstück aufweist, das seinerseits von einer radial äußeren, mit ihrem Außendurchmesser dem Innendurchmesser des einen Endteils angepaßten Metallhülse, einem in diese eingeschobenen und fest mit ihr verbundenen Muffenkörper aus Isoliermaterial und einer in diesen letzteren eingeschobenen und fest mit ihm verbundenen, das andere Endteil aufnehmenden, radial inneren Metallhülse gebildet ist.

Solche elektrisch isolierende Verbindungen sind beispielsweise in der DE-U-6 942 438 und der DE-A-1 954 926 beschrieben und werden entweder als Isolierrohrkupplungen in Rohrleitungen eingebaut oder bilden ein Bestandteil von sogenannten Isolierkugelhähnen, die ihrerseits vornehmlich in Hauseinführungen von Gasleitungen eingebaut werden.

Das Rohreinsatzstück der bekannten Isolierrohrverbindungen weist einen mit einer inneren und einer äußeren Umfangsnut zur Aufnahme von Dichtungs-O-Ringen versehenen Isoliermuffenkörper aus elektrisch isolierendem Kunststoff auf, der innerhalb der ihn umschließenden, aus Blech gefertigten Außenhülse durch Prägenarben fixiert ist, die in Umfangsvertiefungen des Isoliermuffenkörpers hineinragen. In diesen Isoliermuffenkörper ist die ebenfalls aus Blech gefertigte Innenhülse eingeschoben und ebenfalls durch Prägenarben fixiert, die in Vertiefungen hineinragen, welche an der Isoliermuffenkörper-Innenfläche umfänglich verteilt angeordnet sind. Eine das andere Endteil der Rohrverbindung darstellende Innengewindehülse ist in diese innere Blechhülse eingesetzt, durch einen in die innere Umfangsnut des Isoliermuffenkörpers eingelegten O-Ring abgedichtet und am Außenende mit der inneren Blechhülse verschweißt.

Das auf diese Weise einen einstückigen, kompakten Baukörper bildende Rohreinsatzstück wird beim Zusammenbau der Rohrverbindung in das eine rohrförmige Endteil eingeschoben, durch einen in die äußere Umfangsnut des Isoliermuffenkörpers eingelegten O-Ring gegen dieses abgedichtet und sodann durch eine Schweißnaht mit dem Endteil verbunden, die zwischen dem Außenende dieses einen rohrförmigen Endteils und dem Außenrand der äußeren Blechhülse des Rohreinsatzstückes angebracht wird.

Die soeben in ihren Einzelheiten dargelegte, bekannte elektrisch isolierende Verbindung zur Kupplung rohrförmiger Endteile hat den Vorteil, daß das Rohreinsatzstück ein vorgefertigtes Einbauteil darstellt, durch welches die Vorratshaltung und der Arbeitsaufwand bei der Herstellung und auch für die Instandsetzung solcher Rohrverbindungen bzw. Isolierkugelhähne wesentlich vereinfacht und dadurch auch verbilligt ist.

Abgesehen davon, daß das Rohreinsatzstück der bekannten Anordnung in seinem Gesamtaufbau kompliziert und folglich auch teuer ist und der Zusammenbau der Rohrverbindung unter Verwendung eines solchen Rohreinsatzstückes zumindestens auch nicht einfacher als derjenige vergleichbarer, beispielsweise in der DE-U-7 334 370 und in der DE-C-2 347 764 beschriebener, ebenfalls mit einem kompakten Rohreinsatzstück ausgestatteter Isolierrohrkupplungen ist, kann sowohl beim Zusammenbau des Rohreinsatzstückes selbst als auch beim Verschweißen desselben mit dem einen rohrförmigen Endteil die Schweißwärme zum Isoliermuffenkörper gelangen und diesen teilweise oder völlig zerstören.

Der vorliegenden Erfindung liegt infolgedessen die Aufgabe zugrunde, eine isolierende Verbindung rohrförmiger Endteile der eingangs genannten Art hinsichtlich der Herstellung nicht nur im Sinne eines einfacheren und damit billigeren Aufbaus, sondern vor allem auch in bezug auf ein leichteres und für den Isoliermuffenkörper des Rohreinsatzstückes gefahrloseres Verschweißen zu verbessern.

Diese Aufgabe wird, ausgehend von einer elektrisch isolierenden Verbindung zur Kupplung rohrförmiger Endteile der eingangs angesprochenen allgemeinen Bauart, gemäß der Erfindung dadurch gelöst, daß die Außenhülse des Rohreinsatzstückes an ihrem, in Richtung des anderen Endteils weisenden Ende einen radial nach außen ragenden Rand aufweist, der mit seinem Ende wieder radial nach innen zu der ihm gegenüberliegenden Außenfläche der Außenhülse gerichtet ist, daß ferner die Verschweißung zwischen dem radial nach außen ragenden Rand der Außenhülse und der Außenfläche des einen Endteils angeordnet ist, und daß der Isoliermuffenkörper des Rohreinsatzstückes mit der Außenhülse und mit der Innenhülse zusammenvulkanisiert oder zusammengeklebt ist.

Die Erfindung bringt gegenüber der eingangs erwähnten bekannten isolierenden Rohrverbindung den Vorteil, daß sie nicht nur im Ganzen, vor allem auch bezüglich ihres Rohreinsatzstückes, im gesamten Auf- und Einbau wesentlich einfacher und damit in der Herstellung billiger ist, sondern daß insbesondere beim Zusammenbau der Rohrverbindung die Schweißwärme wirksam daran gehindert wird, zum Isoliermuffenkörper vorzudringen und diesen dadurch zu beschädigen oder ganz zu zerstören. Dies wird in der Weise erreicht, daß schon bei der Herstellung des Rohreinsatzstückes eine Schweißung dadurch völlig vermieden wird, daß der Isoliermuffenkörper mit der Außen- und Innenhülse des Rohreinsatzstückes zusammenvulkanisiert oder zusammengeklebt wird, und daß sodann beim anschließenden Zusamenschweißen der Rohrverbindung die Schweißnaht zwischen der Außenfläche des einen rohrförmigen Endteils und dem radial nach innen gebogenen Ende des radial nach außen ragenden Randes der Rohreinsatzstück-Außenhülse angebracht wird, so daß die Schweißwärme nicht unmittelbar in den Isoliermuffenkörper einstrahlen kann, und, soweit sie durch Leitung zu diesem gelangen kann, entweder den Umweg durch die beiden Wandstärken des einen Rohrendes und der Rohreinsatzstück-Außenhülse oder den Umweg über das radial nach innen gebogene Randende und über den gesamten nach außen ragenden Rand dieser Außenhülse nehmen muß. Die Gefahr eines Verschmorens und damit einer Beeinträchtigung oder völligen Zerstörung der Isoliereigenschaften des Isoliermuffenkörpers des Rohreinsatzstückes durch die Schweißhitze ist also bei der erfindungsgemäßen Isolierrohrverbindung weitgehend vermieden.

Ein weiterer Vorteil des radialen Nachaußenund Wiedernachinnenbiegens des Außenhülsenrandes des Rohreinsatzstückes der erfindungsgemäßen Isolierrohrverbindung ist die dadurch erzielte mechanische Verfestigung des Randbereichs der Rohrverbindung, so daß deren Einzelteile mit geringerer Wandstärke als beispielsweise diejenigen der in der DE-U-7 334 370 und der DE-C-2 347 764 beschriebenen Isolierrohrkupplung ausgeführt werden können, wodurch deren Herstellung durch spanlose Formung wesentlich erleichtert wird. Beim Ansetzen einer Rohrzange an den nach außen gewölbten Randbereich der Rohreinsatzstück-Außenhülse drückt sich dieser geringfügig ein, wodurch sich der Rohrzange eine günstigere Angriffsfläche bietet, ohne daß die Rohrenden der Rohrverbindung selbst eingedellt werden. Auch kann eine solche Eindellung im Randbereich bereits von vornherein vorgesehen werden, um auf diese Weise eine gewollte Angriffsfläche für eine Rohrzange zu schaffen.

Die Verstärkungswirkung des nach außen gewölbten Randes der Rohreinsatzstück-Außenhülse wirkt sich aber auch beim Anlegen der axialen Vorspannung an die Rohrverbindung vor dem Zusammenschweißen derselben günstig aus, da der gewölbte Rand der Außenhülse dem betreffenden Werkzeugbereich der Spannvorrichtung eine feste und trotzdem etwas elastische Angriffsfläche bietet und dadurch Verbiegungen oder Verspannungen vor dem Schweißen vermieden werden, was sich auf die fertige Rohrverbindung insofern günstig auswirkt, als diese dann frei von inneren Spannungen ist.

Wird der nach außen gewölbte Rand der Rohreinsatzstück-Außenhülse durch Rollung hergestellt, so ergibt sich dadurch selbsttätig ein axialer Überstand der Stirnwölbung dieses Randes über die benachbarte Stirnfläche des Isoliermuffenkörpers, wodurch die elektrische Überschlagstrecke zwischen der Innenhülse und der Außenhülse des Rohreinsatzstückes vergrößert und dadurch ohne großen Aufwand das elektrische Verhalten der Isolierrohrverbindung verbessert wird.

Schließlich erleichtert der radial nach außen ragende Außenhülsenrand des Rohreinsatzstückes, falls dessen Isoliermuffenkörper aus Hartgummi hergestellt und durch Zusammenvulkanisieren mit der Innen- und Außenhülse verbunden wird, das Herausnehmen des fertigen Rohreinsatzstückes aus der Vulkanisierform.

In der DE-U-7 324 818 ist bereits ein elektrisch isolierendes Rohrverbindungdsstück beschrieben, welches einen aus glasfaserverstärktem Kunststoff bestehenden Isoliermuffenkörper aufweist, der durch Verklebung mit den an ihn angrenzenden Rohrenden verbunden ist. In der gleichen Druckschrift ist auch erwähnt, daß es bereits bekannt ist, Isoliermuffenkörper für Isolierrohrverbindungen aus Gummi herzustellen und diese mit den benachbarten metallenen Rohrenden durch Zusammenvulkanisieren zu verbinden. Über diese Angaben hinaus gibt diese Druckschrift dem Fachmann jedoch keinerlei Lehre im Sinne der vorliegenden Erfindung, insbesondere nicht im Sinne der Gestaltung eines den Isoliermuffenkörper beherbergenden Rohreinsatzstückes und seines Einbaues in die Rohrverbindung selbst.

Das Rohreinsatzstück der in der bereits vorerwähnten DE-U-7 334 370 und der DE-C-2 347 764 beschriebenen Isolierrohrverbindung weist einen ähnlich komplizierten Aufbau auf die dasjenige der in der eingangs erwähnten DE-U-6 942 438 und der DE-A-1 954 926 beschriebenen Isolierrohrverbindung. Es ist durch axiales Hintereinanderfädeln verschiedener Ringkörper, teils aus Metall, teils aus Isoliermaterial zwischen einer metallenen Innen- und einer metallenen Außenhülse und anschließendes radiales Nachaußen- bzw. Nachinnenbiegen dieser Hülsen hergestellt. Das Rohreinsatzstück ist in ein, einen Teil des Hahngehäuses eines Kugelhahnes bildendes rohrförmiges Endteil eingeschoben und durch eine Kehl-Schweißnaht mit diesem verbunden, die zwischen der stirnseitigen ringförmigen Endfläche dieses einen rohrförmigen Endteils und der Umfangsfläche der Rohreinsatzstück-Außenhülse an einer Stelle angebracht ist, die sich recht nahe an benachbarten, aus Isoliermaterial hergestellten Teilen des Rohreinsatzstückes befindet, so daß die Schweißwärme durch Leitung an diese Teile herankriechen und ihre Isoliereigenschaften beeinträchtigen oder ganz zerstören kann. Die Isolierrohrkupplung nach der DE-U-7 334 370 und der DE-C-2 347 764 weist also im wesentlichen, was die Gefahr einer Beeinträchtigung oder Zerstörung der Isoliereigenschaften des Isoliermaterials durch die Schweißwärme anbelangt, die gleichen Nachteile auf, wie diejenige nach der eingangs erwähnten DE-U-6 942 438 und der DE-A-1 954 926.

Außer der Kenntnis, ein, einen selbständigen, kompakten Körper darstellendes Rohreinsatzstück zur Herstellung einer Isolierrohrkupplung zu verwenden und dieses durch eine Kehlnaht mit einem rohrförmigen Endteil zu verschweißen, vermittelt auch die DE-U-7 334 370 und die DE-C-2 347 764 dem Fachmann keine weitergehende Lehre im Sinne der vorliegenden Erfindung, insbesondere wiederum nicht im Sinne der besonderen Gestaltung der Rohreinsatzstück-Außenhülse und der besonderen Anordnung der Verbindungs-Schweißnaht zwischen dieser Außenhülse des Rohreinsatzstückes und dem einen rohrförmigen Endteil.

Eine bevorzugte Ausführungsform der erfindungsgemäßen Isolierrohrverbindung ist dadurch gekennzeichnet, daß zwischen dem Randende und der Außenfläche der Außenhülse des Rohreinsatzstückes ein das eine Endteil aufnehmender Ringspalt angeordnet ist. Diese Ausführungsform zeichnet sich durch besondere Festigkeit der Verbindungskonstruktion unter gleichzeitiger Beibehaltung der guten Schweißwärmedämmung bei Herstellung der Schweißverbindung aus.

Zwei bevorzugte Ausführungsformen der erfindungsgemäßen elektrisch isolierenden Verbindung zur Kupplung rohrförmiger Endteile werden nunmehr unter Bezug auf die anliegenden Zeichnungen beispielsweise beschrieben, in welchen

Fig. 1 eine schematische Darstellung einer erfindungsgemäßen Isolierrohrverbindung in Form einer sogenannten Isolierrohrkupplung zeigt, wobei in der als Halbschnitt dargestellten oberen Figurenhälfte das eine Rohrende als Einschraubende, in der als Außenansicht dargestellten unteren Figurenhälfte dieses Rohrende als Anschweißende gezeigt ist, und

Fig. 2 in schematischer Darstellung die Einbeziehung einer erfindungsgemäßen Isolierrohrverbindung in einen Kugelhahn zeigt, wobei wiederum die obere Figurenhälfte als Halbschnitt und die untere Figurenhälfte als Außenansicht dargestellt ist.

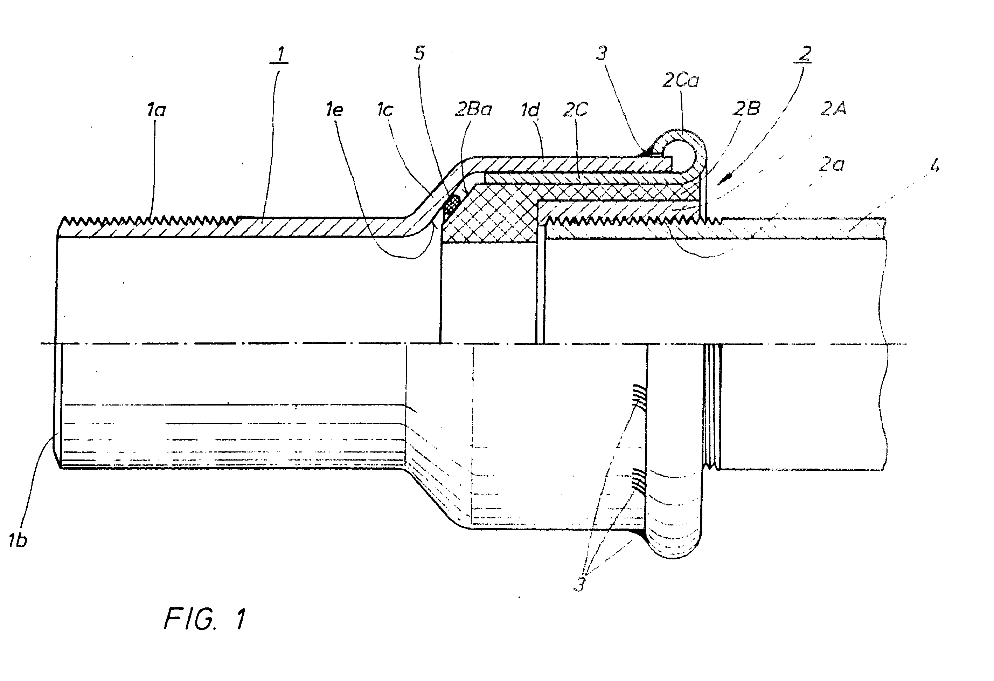

Die in Fig. 1 dargestellte Isolierrohrkupplung weist ein beispielsweise aus nahtlosem Stahlrohr hergestelltes rohrförmiges Endteil 1 und ein Rohreinsatzstück 2 auf, die miteinander durch beispielsweise eine Anzahl von am Umfang verteilten Einzelschweißungen 3 miteinander verbunden sind. In Abwandlung dessen kann auch eine ununterbrochene Umfangsschweißnaht Anwendung finden.

Das Rohrende 1 ist, wie in der Figur ersichtlich, durch spanlose Formung bei 1c sich kegelig erweiternd zu einer zylindrischen Muffe 1d ausgebildet.

Das Rohreinsatzstück 2 weist eine radial innere, metallene Hülse 2A auf, die beim dargestellten Beispiel mit einem Innengewinde 2a versehen ist, in welches ein mit einem entsprechenden Außengewinde versehenes anderes rohrförmiges Endteil 4 einschraubbar ist. Die Innenhülse 2A wird von einem sie koaxial umfänglich und stirnseitig abdeckenden Isoliermuffenkörper 2B aus hartem Isoliermaterial umgriffen, der seinerseits von einer metallenen Außenhülse 2C von gleichem Außendurchmesser wie der Innendurchmesser des zylindrisch verlaufenden Muffenteils 1d des einen rohrförmigen Endteils 1 koaxial umfaßt wird.

Die metallene Innengewindehülse 2A des Rohreinsatzstückes 2 kann beispielsweise eine ganze oder eine auf halbe Länge geschnittene genormte Rohrgewindehülse sein. In Abwandlung dessen kann das Teil 2A auch ein Rohr sein, welches als Anschweißende um eine bestimmte Länge über die gemeinsame Stirnfläche der Teile 2B und 2C axial nach außen übersteht.

Der die Innengewindehülse 2A koaxial umfänglich und stirnseitig abdeckende Isoliermuffenkörper 2B kann beispielsweise aus Hartgummi oder aus einem verstärktem Duroplast, wie beispielsweise aus glasfaserverstärktem Epoxidharz bestehen und kann im ersteren Fall auf die Innengewindehülse 2A aufvulkanisiert oder aufgeklebt sein bzw. im letztgenannten Fall auf die Innengewindehülse 2A aufgeklebt oder durch Aufwickeln einer mit noch weichem Duroplast getränktem Verstärkungseinlage auf diese Innengewindehülse 2A hergestellt sein. Der Außendurchmesser dieses Isoliermuffenkörpers 2B ist gleich dem Innendurchmesser der Außenhülse 2C. Der Isoliermuffenkörper 2B kann entweder, falls er aus Hartgummi besteht, durch Einvulkanisieren oder Einkleben mit dieser Hülse 2C untrennbar verbunden sein, oder aber, falls er aus einem Duroplast mit Verstärkungseinlage besteht, durch Einkleben untrennbar mit der Hülse 2C verbunden sein bzw. in noch nicht ausgehärtetem Zustand in die Hülse 2C eingeschoben sein, so daß er sich beim Aushärten untrennbar mit dieser Hülse verbindet.

Wie aus der Zeichnung ersichtlich, ist die dem einen rohrförmigen Endteil 1 zugewandte Stirnfläche 2Ba des Isoliermuffenkörpers 2B des Rohreinsatzstückes 2 kegelig ausgebildet, wobei diese kegelige Stirnfläche 2Ba koaxial zu der ihr gegenüberliegenden Innenfläche 1e der kegeligen Erweiterung 1c des einen rohrförmigen Endteils 1 verläuft.

Die Außenhülse 2C des Rohreinsatzstückes 2 ist beispielsweise aus nahtlosem Stahlrohr hergestellt und an ihrem Ende spanlos zu einem sich radial nach außen rollenden Rand 2Ca verformt. Das wieder radial nach innen weisende Ende dieses nach außen gerollten Randes 2Ca der Außenhülse 2C läßt zwischen sich und der ihm gegenüberliegenden Außenfläche dieser Hülse 2C einen Ringspalt, der knapp der Materialstärke des muffenartig erweiterten zylindrischen Teils 1d des einen rohrförmigen Endteils 1 entspricht. Die axiale Länge der Außenhülse 2C des Rohreinsatzstückes 2 ist, wie aus der Zeichnung ersichtlich, so gewählt, daß einerseits der radial nach außen gerollte Rand 2Ca dieser Hülse mit den ihm benachbarten Stirnflächen des Isoliermuffenkörpers 2B und der Innengewindehülse 2A mit geringfügigem axialem Überstand abschließt und andererseits das andere Ende der Außenhülse 2C mit der radial äußeren Kante der kegeligen Stirnfläche 2Ba des Isoliermuffenkörpers 2B im wesentlichen bündig abschließt.

Die gesamte axiale Länge des von den Teilen 2A, 2B und 2C untrennbar gebildeten einstückigen Rohreinsatzstücks 2 ist im Verhältnis zur axialen Länge des zylindrisch verlaufenden Muffenteils 1d des einen rohrförmigen Endteils 1 so gewählt, daß nach Einlegen eines aus Weichgummi bestehenden Dichtungsringes 5 in die kegelige Erweiterung 1c des einen rohrförmigen Endteils 1 und Einschieben des Rohreinsatzstückes 2 in den Muffenteil 1d des einen rohrförmigen Endteils 1 bis zum zentrierenden Aufliegen der kegeligen Stirnfläche 2Ba des Isoliermuffenkörpers 2B des Rohreinsatzstückes 2 auf diesem Dichtungsring 5 noch genügend axiales Spiel zwischen dem radial nach außen gerollten Rand 2Ca der Außenhülse 2C des Rohreinsatzstückes 2 und dem Ende des zylindrisch verlaufenden Muffenteils 1d des einen rohrförmigen Endteils 1 verbleibt, so daß diese beiden Teile beim Zusammenbau der Isolierrohrkupplung in einer Vorrichung unter elastischer Verformung des Dichtungsringes 5 axial gegeneinander verspannt und sodann durch Anbringung der Verbindungsschweißung 3 in diesem axial verspannten Zustand miteinander verbunden werden können.

Ist der Isoliermuffenkörper 2B des Rohreinsatzstückes 2 aus Gummi gefertigt und ist dieser weich genug, um einerseits an der Stirnfläche 2Ba eine einwandfreie Abdichtung an der kegeligen Erweiterung 1c und andererseits eine ausreichende Axialverspannung der miteinander zu verschweißenden Teile zu gewährleisten, so kann der Dichtungsring 5 gegebenenfalls entfallen.

Da die Schweißnaht 3 als Kehlnaht zwischen dem radial nach innen gerichteten Ende des radial nach außen gerollten Randes 2Ca der Außenhülse 2C des Rohreinsatzstückes 2 und der Außenfläche des Muffenteils 1d des einen rohrförmigen Endteils 1 angeordnet ist, kann die Schweißwärme weder durch Strahlung, noch durch Wärmeleitung unmittelbar zum Isoliermuffenkörper 2B des Rohreinsatzstückes 2 gelangen, sondern sie muß entweder den Umweg durch den Muffenteil 1d des einen Rohrendes und die Außenhülse 2C hindurch nehmen oder aber den Umweg über das radial nach innen gerollte Ende des radial nach außen gerollten Randes 2Ca der Außenhülse 2C und über diesen einen kühlenden Luftraum umschließenden Rand 2Ca selbst nehmen, um zum Isoliermuffenkörper 2B zu gelangen.

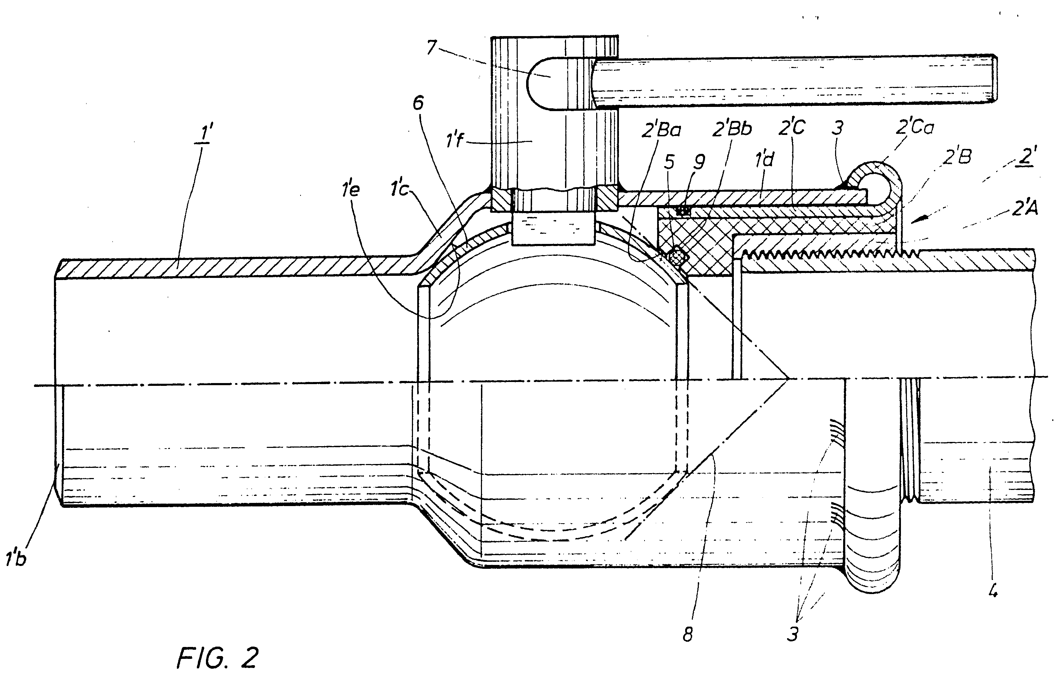

Fig. 2 zeigt die konstruktive Einbeziehung der in Fig. 1 dargestellten Isolierrohrverbindung in einen Kugelhahn. Gleiche Teile sind jeweils mit gleichen Bezugsziffern und abgewandelt ausgebildete Teile sind jeweils mit Strichindex bezeichnet.

Wie aus der Zeichnung ersichtlich, bildet das eine rohrförmige Endteil 1' mit seinem erweiterten, zylindrischen Muffenteil 1'd gleichzeitig das Kugelhahngehäuse, welches das Kugelküken 6 beherbergt und an welchem auch ein Lagerungsstutzen 1'f für die Kükenwelle 7 angebracht ist.

Aus der Zeichnung ist ersichtlich, daß dieser das Kugelhahngehäuse bildende zylindrische Muffenteil 1'd ein Rohreinsatzstück 2' beherbergt, in welches ein anderes rohrförmiges Endteil 4 einschraubbar ist. Die kegelige Stirnfläche 2'Ba des Isoliermuffenkörpers 2'B des Rohreinsatzstückes 2' verläuft koaxial zu einer strichpunktiert eingezeichneten virtuellen Tangentialkegelfläche 8 zur Außenfläche des Kugelkükens 6. In dieser kegeligen Stirnfläche 2'Ba des Isoliermuffenkörpers 2'B des Rohreinsatzstückes 2' ist eine den Dichtungsring 5 beherbergende Ringnut 2'Bb angeordnet.

Beim axialen gegenseitigen Verspannen des einen rohrförmigen Endteils 1' und des Rohreinsatzstückes 2' beim Zusammenbau preßt sich der Dichtungsring 5 an die kugelige Außenfläche des Kugelkükens 6 an, welch letzteres sich seinerseits an der kegeligen Innenfläche 1'e der kegeligen Erweiterung 1'c des einen rohrförmigen Endteils 1' abstützen kann. In diesem verspannten Zustand wird wiederum die Schweißverbindung 3 angebracht, wodurch die gegenseitige Verspannung der Teile aufrechterhalten wird. Handelt es sich bei der Schweißverbindung 3, wie in Fig. 2 dargestellt, um eine Anzahl von auf den Umfang verteilten Heftschweißungen, so ist die Außenhülse 2'C des Rohreinsatzstückes 2' mit einer äußeren Umfangsnut versehen, in die ein Dichtungs-O-Ring 9, beispielsweise aus Weichgummi eingelegt ist, der an der Innenumfangsfläche des Muffenteils 1'd des einen rohrförmigen Endteils 1' dichtend anliegt. Ist die Schweißverbindung 3 eine umfänglich geschlossene Schweißnaht, so kann der Dichtungsring 9 entfallen.

**Patentansprüche**

1. Elektrisch isolierende Verbindung zur Kupplung rohrförmiger Endteile (1, 4), mit einem entgegen einer elastischen Axial-Gegenkraft in das eine Endteil (1) abdichtend eingeschobenen, das andere Endteil (4) haltenden und mit dem einen Endteil (1) unter Aufrechterhaltung der Axialspannung verschweißten Rohreinsatzstück (2), das seinerseits von einer radial äußeren, mit ihrem Außendurchmesser dem Innendurchmesser des einen Endteils (1) angepaßten Metallhülse (2C), einem in diese eingeschobenen und fest mit ihr verbundenen Muffenkörper (2B) aus Isoliermaterial und einer in diesen letzteren eingeschobenen und fest mit ihm verbundenen, das andere Endteil (4) aufnehmenden, radial inneren Metallhülse (2A) gebildet ist, dadurch gekennzeichnet, daß die Außenhülse (2C; 2'C) des Rohreinsatzstückes (2; 2') an ihrem, in Richtung des anderen Endteils (4) weisenden Ende einen radial nach außen ragenden Rand (2Ca; 2'Ca) aufweist, der mit seinem Ende wieder radial nach innen zu der ihm gegenüberliegenden Außenfläche der Außenhülse (2C; 2'C) gerichtet ist, das ferner die Verschweißung (3) zwischen dem radial nach außen ragenden Rand (2Ca; 2'Ca) der Außenhülse (2C; 2'C) und der Außenfläche des einen Endteils (1d; 1'd) angeordnet ist, und daß der Isoliermuffenkörper (2B; 2'B) des Rohreinsatzstückes (2; 2') mit der Außenhülse (2C; 2'C) und mit der Innenhülse (2A; 2'A) zusammenvulkanisiert oder zusammengeklebt ist.

2. Elektrisch isolierende Rohrverbindung nach Anspruch 1, dadurch gekennzeichnet, daß zwischen dem Randende und der Außenfläche der Außenhülse (2C; 2'C) des Rohreinsatzstükkes (2; 2') ein das eine Endteil (1d; 1'd) aufnehmender Ringspalt angeordnet ist.

## Claims

1. An electrically insulating joint for coupling tubular extremities (1, 4), having a tubular insert member (2) being sealingly inserted into one (1) of said tubular extremities against a resilient axial counter force and being welded to said one tubular extremity (1) under maintenance of said axial tension, said tubular insert member supporting the other one (4) of said tubular extremities and consisting of a radially outer metal sleeve (2C), the outer diameter of which conforms with the inner diameter of said one tubular extremity (1), of a socket body (2B) made of insulating material and being inserted into and tightly connected to said metal sleeve, and of a radially inner metal sleeve (2A) receiving said other tubular extremity (4) and being inserted into and tightly connected to said socket body, characterized in that the outer sleeve (2C; 2'C) of said tubular insert member (2; 2') has a radially outwardly extending flange (2Ca; 2'Ca) situated at that end of the member being at the same side of the assembly as said other tubular extremity (4), and the rim of said flange extending again radially inwardly toward the outer surface of said outer sleeve (2C; 2'C), furthermore that said weld (3) is arranged between said radially outwardly extending flange (2Ca; 2'Ca) of said outer sleeve (2C; 2'C) and the outer surface of said one tubular extremity (1d; 1'd), and that the insulating socket body (2B; 2'B) of said tubular insert member (2; 2') is vulcanized or adhered to said outer sleeve (2C; 2'C) and to said inner sleeve (2A; 2'A).

2. An electrically insulating tube joint as claimed in claim 1, characterized in that an annular gap for receiving said one tubular extremity (1d; 1'd) is provided between the rim of said flange and the outer surface of said outer sleeve (2C; 2'C) of the tubular insert member (2; 2').

## Revendications

1. Joint électriquement isolant pour l'accouplement d'extrémités tubulaires (1, 4) avec une pièce intercalaire tubulaire (2) insérée de façon étanche à l'encontre d'une force antagoniste axiale élastique dans l'une (1) desdites extrémités, tenant l'autre (4) desdites extrémités et solidarisée par soudage avec ladite une (1) des extrémités, sous maintien de la tension axiale, ladite pièce intercalaire étant, de son côté, formée d'une douille métallique (2C) radialement extérieure, de diamètre extérieur adapté au diamètre intérieur de ladite une (1) des extrémités, d'un corps de manchon (2B) en matériau isolant inséré dans ladite douille et solidarisé avec elle, et d'une douille métallique (2A) radialement intérieure, insérée dans ledit corps de manchon, solidarisée avec celui-ci et recevant ladite autre (4) des extrémités, ledit joint caractérisé en ce que la douille extérieure (2C; 2'C) de la pièce intercalaire tubulaire (2; 2') présente au niveau de son bout orienté vers ladite autre (4) des extrémités un bord (2Ca; 2'Ca) faisant saillie radialement vers l'extérieur, lequel bord est à nouveau, par son bout, orienté radialement vers l'intérieur en directions de la face extérieure opposée de la douille extérieure (2C; 2'C), en ce qu'en outre la soudure (3) est disposée entre le bord (2Ca; 2'Ca) faisant saillie radialement vers l'extérieur de la douille extérieure (2C; 2'C) et la face externe (1d; 1'd) de ladite une des extrémités et en ce que le corps de manchon isolant (2B; 2'B) de la pièce intercalaire tubulaire (2; 2') est assemblé par collage ou par vulcanisation avec la douille intérieure (2A; 2'A).

2. Joint électriquement isolante selon la revendication 1, caractérisée en ce qu'entre le bout du bord et la face extérieure de la douille extérieure (2C; 2'C) de la pièce intercalaire tubulaire (2; 2') on ménage un entrefer annulaire recevant ladite une (1d; 1'd) des extrémités.

FIG. 1

FIG. 2